(19) **Europäisches Patentamt**

**European Patent Office**

**Office européen des brevets**

(11) **EP 1 213 862 A1**

(12) **EUROPEAN PATENT APPLICATION**

(43) Date of publication:
**12.06.2002 Bulletin 2002/24**

(51) Int Cl.⁷: **H04J 3/16**, H04J 3/06,
H04L 5/14, H04L 1/22

(21) Application number: **00127059.4**

(22) Date of filing: **11.12.2000**

| | |
|---|---|
| (84) Designated Contracting States:<br>**AT BE CH CY DE DK ES FI FR GB GR IE IT LI LU MC NL PT SE TR**<br>Designated Extension States:<br>**AL LT LV MK RO SI**<br><br>(71) Applicant: **Marconi Communications GmbH**<br>**71522 Backnang (DE)**<br><br>(72) Inventors:<br>• **Fischer, Jürgen**<br>**71522 Backnang (DE)** | • **Kaffenberger, Rüdiger**<br>**71573 Allmersbach (DE)**<br><br>(74) Representative: **Webb, Peter Reginald**<br>**Marconi Intellectual Property**<br>**Marrable House**<br>**The Vineyards**<br>**Gt. Baddow**<br>**Chelmsford Essex CM2 7QS (GB)** |

(54) **Optical data network with protection switching**

(57)    An optical point-to-multipoint connection arrangement comprises a number of ONUs connected via an optical distribution network (ODN) to an OLT containing a main CTF ($CTF_A$) and one or more redundant CTFs ($CTF_R$). The main CTF ($CTF_A$) carries out ranging on at least one of the ONUs ($ONU_A$), then $CTF_R$ requests $ONU_A$ to transmit at a given time a signal burst which it expects to receive, taking ranging into account, at a time $t_0$, but receives instead at a time $t_0+\delta$, $\delta$ being positive or negative. $CTF_R$ then alters its own time-reference in the same direction as the $\delta$, i.e. where $\delta$ is positive, delaying its time-reference by that amount and where $\delta$ is negative, advancing its time-reference by the same amount. The result is that, when operation is switched from the main to the redundant path, a major interruption in service is avoided.

Fig 6

Printed by Jouve, 75001 PARIS (FR)

**Description**

The invention relates to a method for determining a differential time-delay between signals received by two core transport functions in an optical line termination forming part of an optical point-to-multipoint connection arrangement, and a method for operating such a connection arrangement.

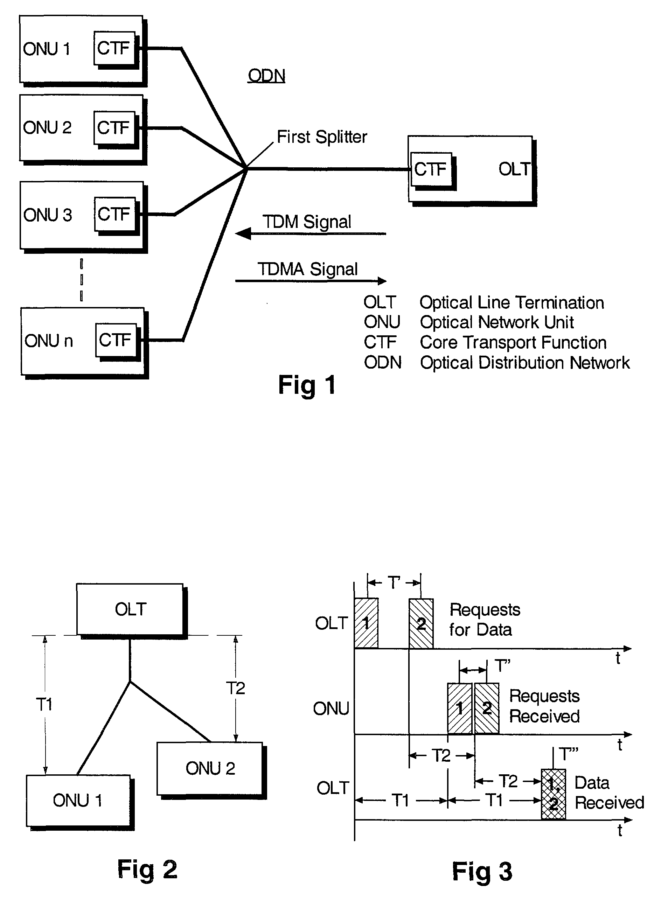

It is common practice to employ a point-to-multipoint connection arrangement to link a headstation, referred to in an optical system as an optical line termination (OLT), to other stations (optical network units (ONUs)). In such an arrangement (see Figure 1) the OLT addresses the ONUs by sending out in a downstream direction a time-division multiplex (TDM) signal which reaches the ONUs through an optical transmission medium, the so-called optical distribution network (ODN). The signal path is divided into a multiplicity of paths by a so-called "first splitter". The signals sent by the OLT and those received by the ONUs are sent and received, respectively, by means of respective core transport functions (CTFs). Conversely, when the individual ONUs wish to access the transmission medium ODN, they do so using a time-division multiple-access (TDMA) signal transmitted in an upstream direction via the respective CTFs. The various TDMA signals are combined into a string of interleaved signals at the first splitter and the resulting combined signal is received at the CTF of the headstation, OLT.

One potential problem with regard to the TDMA interleaving process just described is the fact that the various ONUs are situated at different distances from the first-splitter point, which thus gives rise to different delays in propagation of the respective signals along the medium, with the consequent risk that the respective signals will not be correctly combined at the CTF of the OLT. This is explained with reference to Figures 2 and 3. In Figure 2 two ONUs are shown, ONU1 and ONU2, in which the respective optical paths have different lengths, producing different respective propagation delays T1 and T2. The effect of this is illustrated in Figure 3, in which, as a first step, the OLT asks the ONUs 1 and 2 to send data in respective data packets at different times, as a second step the ONUs receive these requests and send off the data, and as a third step the OLT receives the data. However, due to the different delays T1 and T2, the time-difference T' between the requests send by the OLT is narrowed into T" by the time those requests reach the ONU and that same time-difference T" existing between the data signals sent in response by the ONUs is narrowed still further into the (as illustrated in this particular example) virtually zero difference T''' by the time they reach the OLT. This clashing of data signals is clearly undesirable, since it creates confusion and a corruption of data.

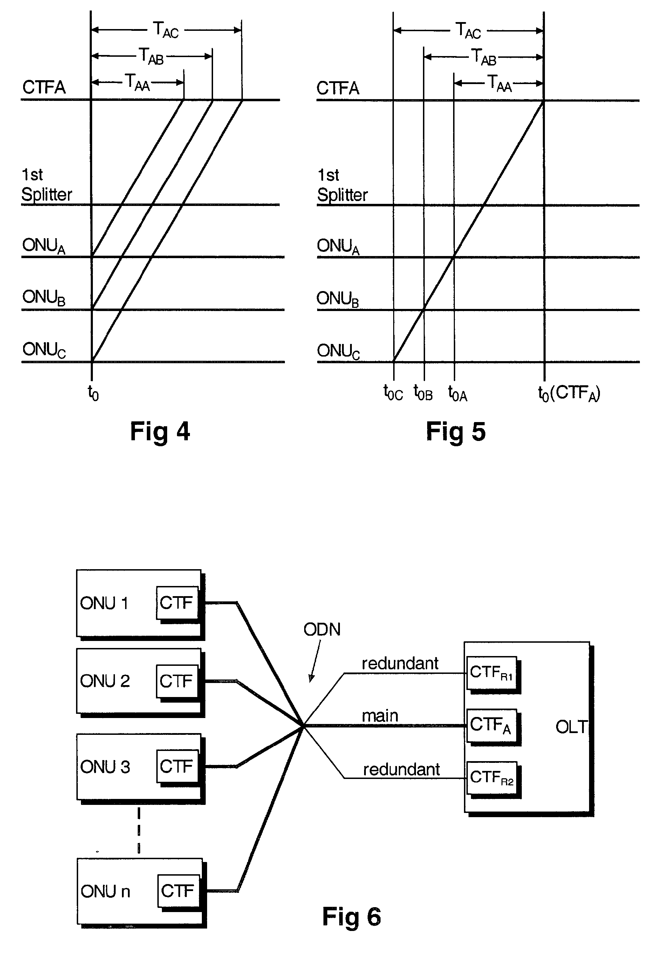

In order to obviate the difficulties that such differential propagation delays create, a process known as "ranging" is carried out. In this process (see Figure 4) the CTF of the OLT sends out a request to all the various ONUs (here there are three ONUs designated $ONU_A$-$ONU_C$) to transmit a signal at a particular time (cf. Figure 3) and registers the times at which the signals (so-called "burst" signals) transmitted by the ONUs are actually received. From this the various propagation delays can be determined. Thus, as shown in Figure 4, the burst from $ONU_A$, the nearest ONU, is received at a time-delay $T_{AA}$ after the expected time ($t_0$), that from $ONU_B$, which is more distant than $ONU_A$, at a time-delay $T_{AB}$ after the expected time and that from $ONU_C$ (the most remote ONU) at a time-delay $T_{AC}$ after the expected time. For convenience the "expected time" is shown in each case as a fixed point in time, $t_0$, though it should be appreciated that the actual times at which the ONUs will issue their bursts will be different, i.e. the transmission times will be sequential.

The CTF of the OLT then issues a command to $ONU_A$-$ONU_C$ to advance their respective time-references by the respective amounts $T_{AA}$, $T_{AB}$, $T_{AC}$. Now, when actual data are required to be transferred across the optical medium, when the CTF requests data from $ONU_A$-$ONU_C$, these data will be transmitted ahead of the required time $t_0$ (which again will be different in each case) by the amounts $T_{AA}$, $T_{AB}$, $T_{AC}$, respectively, so that in each case the data arrive at the CTF at the actual time expected ($t_0(CTF_A)$), instead of after this time (see Figure 5). The upshot of this is that accurate interleaving of data on a TDMA basis can be achieved with consequent lack of data corruption.

It is desirable in a practical point-to-multipoint system to employ some form of backup for the event that the path between the OLT and the first splitter develops a fault. Figure 6 shows such a backup arrangement in which, along with the main OLT CTF (designated now $CTF_A$) two further OLT CTFs ($CTF_{R1}$ and $CTF_{R2}$) are included. Both of these further CTFs have their own optical link or path, here termed a "redundant" path in contrast to the "main" path associated with $CTF_A$. The redundant $CTF_{R1}$ and $CTF_{R2}$ are included in case the main path and $CTF_A$ become non-operational. In this case it is necessary to perform a switching operation at the OLT-end in order to activate the desired redundant path.

Although the desirability of providing such a backup scheme is already known, in practice this measure has not been employed widely for two reasons: firstly, costly measures are required to monitor the integrity of the redundant CTF and optical path in preparation for their deployment in a fault situation, and secondly, the act of switching over from the main CTF to the redundant CTF has up to now created unacceptable interruptions in service.

In accordance with a first aspect of the invention there is provided a method for determining a differential time-delay value between signals received by a first core transport function ($CTF_A$) and a further core transport function ($CTF_{R1}$) in an optical line termination (OLT) of an optical point-to-multipoint arrangement, as specified in Claim 1.

Under a second aspect, the invention provides a method for operating an optical point-to-multipoint connection arrangement as specified in Claim 2. Embodiments of the invention are contained in the various subclaims.

An embodiment of the invention will now be described, by way of example only, with reference to the drawings, of which:

Figure 1 is a known optical point-to-multipoint connection arrangement;
Figures 2 and 3 illustrate the reason for the need for ranging in the connection arrangement of Figure 1;
Figures 4 and 5 are timing diagrams relating to a known ranging operation;
Figure 6 is a known optical point-to-multipoint, connection arrangement incorporating additional, redundant optical paths between the optical line termination (OLT) and the optical network units (ONUs);
Figure 7 illustrates the reason for a service-interruption problem underlying a switchover procedure which involves the transfer of operation from a first core transport function $CTF_A$ to a further, redundant core transfer function $CTF_R$, and
Figures 8, 9 and 10 are timing diagrams relating to a method for operating an optical point-to-multipoint connection arrangement in accordance with an aspect of the present invention.

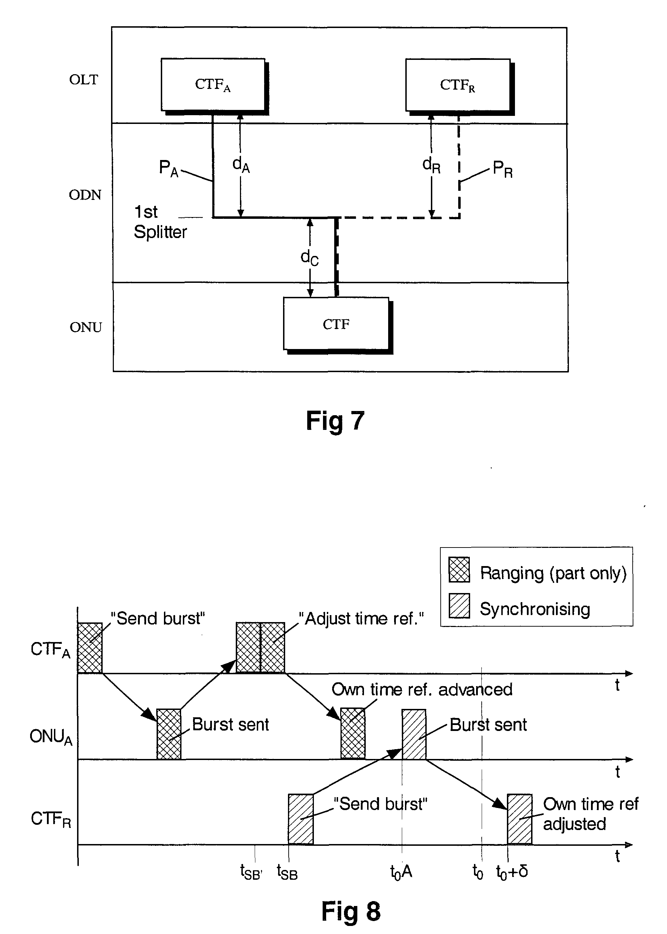

Turning to Figure 7, the effect of different distances between the OLT CTFs and the first splitter is now explained. The optical path between $CTF_A$ and the CTF in the ONU and that between $CTF_R$ (here only a single redundant path is being considered) and the CTF in the ONU are shown as $P_A$ and $P_R$, respectively. The roundtrip delays associated with those optical paths are:

$$D_A = d_A + d_C$$

$$D_R = d_R + d_C$$

The difference between these delays is:

$$\Delta = D_A - D_R = d_A - d_R$$

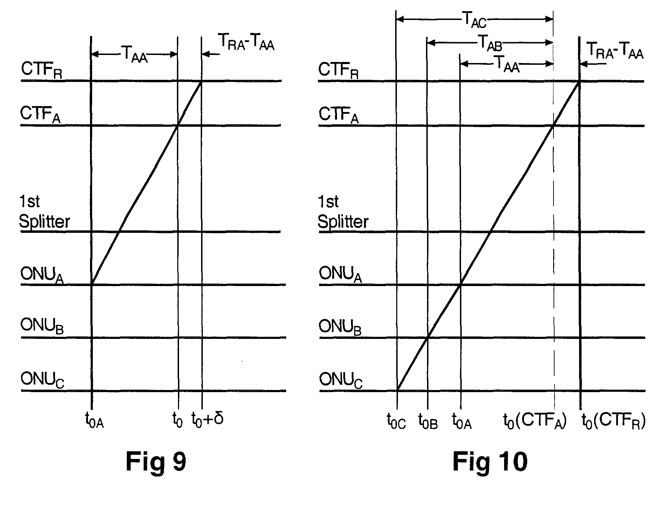

Clearly, any data packet on its way to $CTF_A$ but diverted, in the event of a fault involving $CTF_A$ and its associated optical path, along the redundant path to $CTF_R$ could arrive at $CTF_R$ either before, at roughly the same time as, or after the previous TDMA data packet reached $CTF_A$ (it is assumed that both $CTF_A$ and $CTF_R$ have initially the same time-references). In the first two of these cases (arrival before or at the same time) the result will be corruption of data; in the latter case (arrival after) the result could be, with the usual synchronisation schemes, a loss of synchronisation. The present invention arranges for the individual time-references of the main and redundant CTFs in the OLT to be adjusted relative to each other in order to avoid this problem. The way this is achieved is now explained with the aid of Figures 8 and 9.

Referring first to Figure 8, it is assumed that $CTF_A$ has at least begun the normal ranging process, i. e. that it has ascertained the time-delay associated with at least one of the ONUs, e.g. $ONU_A$, and has instructed that ONU to advance its own time-reference by this amount. This having been done (or possibly shortly beforehand, as shown in Figure 8), $CTF_R$ then requests $ONU_A$ to issue a signal burst at a point in time $t_{0A}$. This burst would arrive at $CTF_A$ at the expected absolute time $t_0$, but arrives at $CTF_R$ somewhat later, i.e. at $t_0+\delta$, since - in this particular case - $CTF_R$ is more remote from the first splitter than is $CTF_A$. Since $CTF_R$ expected the burst at $t_0$, it can derive the differential time-delay between itself and $CTF_A$, namely $\delta$. $CTF_R$ now changes its own time-reference by $\delta$ in a sense such that its time-reference is synchronised with that of $CTF_A$; i.e. where $\delta$ is positive, $CTF_R$ delays its time-reference and, where $\delta$ is negative, $CTF_R$ advances its time-reference. Any data signal which is diverted onto the $CTF_R$ path is therefore as a result integrated seamlessly into the existing datastream, since for both $CTF_A$ and $CTF_R$ signals arrive at the expected time $t_0$, so that interruptions in service are minimal.

The relative times of receipt of the burst from $ONU_A$ at $CTF_A$ and $CTF_R$ are shown graphically in Figure 9. Here $\delta$ is seen to be the difference in propagation delay between $CTF_A$ and $ONU_A$ on the one hand and between $CTF_R$ and $ONU_A$ on the other. This difference is also designated in Figure 9 as $T_{RA}-T_{AA}$.

The combined effects of normal ranging (initial stages only) and redundant/active CTF sychronisation are illustrated in Figure 10. Here data signals transmitted by the various ONUs in the system following a request to transmit at (for ease of illustration only) the same time can be seen to arrive at $CTF_A$ and $CTF_R$ at the same instant, $t_0$, relative to their individual time-references, though in terms of absolute time the received signals are temporally distinct (i.e. $t_0(CTF_A)$ on the one hand and $t_0(CTF_R)$ on the other). Hence, as far as signal processing is concerned, there is uniformity of operation regardless of which CTF (main or redundant) is in service.

In connection with Figure 8, although the "Send burst" instruction by the $CTF_R$ is shown as occurring at the point in time shown ($t_{SB}$), it may in practice occur earlier or later than this. The criterion to be observed in this respect is that the burst sent by $ONU_A$ in response to this instruction should not be transmitted before $ONU_A$ has adjusted (advanced) its own time-reference as part of the ranging process. Hence this burst could be sent directly following this time-reference adjustment, in which case $t_{SB}$ could be moved forward to as early as $t_{SB'}$. A $CTF_R$ burst instruction sent later than $t_{SB'}$ will have the drawback that there will be an undesirable time delay before $CTF_R$ is able to take over operation from $CTF_A$ without causing glitches in performance.

It was mentioned earlier that the redundant path from the OLT to the first splitter could be realised in multiple form (cf. $CTF_{R1}$ and $CTF_{R2}$ in Figure 6). Where this is done, it is necessary to employ some kind of selection procedure for determining which of the redundant paths is to be employed in the event of a fault in the main path. One way of doing this is simply to allocate a priority rank to each of the redundant CTFs and to follow the prescribed hierarchical order in the event of a fault. Thus, when the $CTF_A$ path became non-operational, $CTF_{R1}$ would be brought into play; when $CTF_{R1}$ became non-operational, $CTF_{R2}$ would take over, and so on. In the meantime the faults associated with the respective non-operational paths would be cleared and, eventually, operation would revert to $CTF_A$ as normal.

An alternative scheme is to arrange for selection to be made on the basis of the service-related properties associated with the various redundant CTFs. Such properties would include signal strength as received by the various CTFs, error rate of the data handled by the CTFs, and so on. Operation would then switch over to that CTF associated with either the highest signal strength or the lowest error rate, or possibly both.

The invention envisages that the redundant path or paths will be periodically tested to ensure that they are at all times fit for service. An advantageous way of achieving this is to alternate operation between the main and redundant paths or between the main and all the redundant paths, where more than one redundant path exist.

It should be noted that, to achieve the above-described synchronisation between the main and redundant paths, no special communications channel is required between the CTFs, but rather switching takes place purely as a result of the behaviour of the CTFs in the OLT and the ONU. Regardless of which option is employed for selecting one of multiple redundant paths, the switchover procedure is as follows:

(a) All ONUs are ranged and the various CTFs in the OLT are synchronised as described earlier.
(b) The main path $P_A$ is active, i.e. the laser within $CTF_A$ is switched on and is transmitting the TDM signal.
(c) The redundant path(s) are non-operational, i.e. the lasers in the respective $CTF_R$s are switched off.
(d) $CTF_A$ and the $CTF_R$'s both receive the TDMA signal.
(e) An anomaly occurs between $CTF_A$ and the first splitter.
(f) All the ONUs detect a loss of signal and switch their respective lasers off.
(g) The selected $CTF_R$ detects "dark fiber" and switches its laser on and thereby transmits the TDM signal.
(h) The ONUs receive the TDM signal once more and resume operation in the upstream direction.
(i) $P_R$, or one of the multiple $P_R$s, is now the active path.
(j) The anomaly in $P_A$ is discovered and put right, leaving $P_A$ once more ready for service.

The various advantages of the invention as described in the disclosed embodiment are:

(1) No significant interruption in service (e.g. in ATM networks) during switchover (an interruption time of <50ms is possible), since switchover takes place in the Physical Layer;
(2) No dedicated communications channel required for switchover or for coordination between the redundant CTFs in the OLT;
(3) By performing a cyclical switchover between active and redundant paths, it can be assured that the redundant paths are ready for service;
(4) No additional expenditure (in software or hardware) is required, since synchronisation takes place in the OLT - hence the necessary outlay is located centrally in the OLT;
(5) Redundant paths can be retrofitted into the system without the need to modify the existing ONUs;
(6) This procedure fulfils the basic conditions of ITU G.983.1 (OLT-only duplex system).

Finally, although it has been assumed that, where there is only one redundant path, it is the time-reference of the $CTF_R$ associated with that path which will be altered to produce synchronisation with the $CTF_A$, in practice it would be possible to alter the time-reference of the main path ($CTF_A$) instead. It is the relative re-alignment of the time-references which is the important thing. Also, where there are multiple redundant paths, instead of changing the respective time-references of the various redundant paths to synchronise with that of the main path, it would be possible to synchronise the various paths to the time-reference of any one arbitrarily selected path. Thus, for example, where there were four paths, $P_A$, $P_{R1}$, $P_{R2}$ and $P_{R3}$, it could be arranged to change the time-references of, say, $P_A$, $P_{R1}$ and $P_{R3}$ to align with that of $P_{R2}$. The criterion here is that all the paths should be mutually synchronised.

## Claims

1. Method for determining a differential time-delay value between signals received by a first core transport function ($CTF_A$) and a further core transport function ($CTF_{R1}$), respectively, the first and further core transport functions forming part of an optical line termination (OLT) in a point-to-multipoint connection arrangement and being connected by way of respective first and further optical-fibre paths to a plurality of optical network units (ONUs), the optical network units providing said signals, in which method:

   (a) the first core transport function ($CTF_A$) requests one of the optical network units ($ONU_A$) to send at a first given point in time a ranging signal to the first core transport function;
   (b) the first core transport function ($CTF_A$) receives the ranging signal at a time delayed from the first given point in time by a first amount;
   (c) said one of the optical network units advances its time reference by the first amount;
   (d) the further core transport function ($CTF_{R1}$) requests said one of the optical network units to send at a second given point in time a delay-measurement signal to said further core transport function ($CTF_{R1}$);
   (e) said further core transport function ($CTF_{R1}$) receives the delay-measurement signal at a time advanced or delayed from the second given point in time by a second amount, said second amount corresponding to said differential time-delay.

2. Method for operating an optical point-to-multipoint connection arrangement comprising a first core transport function ($CTF_A$), a further core transport function ($CTF_{R1}$), a plurality of optical network units (ONUs) and a first optical-fibre path and a further optical-fibre path connecting the respective first and further core transport functions to the optical network units, the method comprising the method for determining a differential time-delay value according to Claim 1 and comprising also the further steps of:

   (f) re-aligning the time-references of the first and further core transport functions relative to each other such that both first and further core transport functions would appear to register receipt of a signal from a particular optical network unit (ONU) at the same-named point in time ($t_0(CTF_A)$, $t_0(CTF_R)$) on their respective time-frames, and
   (g) in the event of one of the first and further core transport functions or associated optical-fibre path becoming non-operational, bringing into operation the other of the first and further core transport functions and associated optical-fibre path.

3. Method according to Claim 2 wherein, when in step (e) the further core transport function ($CTF_R$) receives the delay measurement signal at a time advanced from the second given point in time, the time reference of the further core transport function is advanced by the amount of said differential time-delay and, when in step (e) the further core transport function receives the delay measurement signal at a time delayed from the second point in time, the time reference of the further core transport function is delayed by the amount of said differential time-delay.

4. Method according to Claim 3, wherein the further core transport function ($CTF_R$) and associated optical-fibre path are periodically tested for integrity of data transmission.

5. Method according to Claim 4, wherein the first and further core transport functions ($CTF_A$, $CTF_R$) exchange roles during normal operation.

6. Method according to Claim 5, wherein the exchanging of roles takes place on a regular basis.

7. Method according to Claim 6, wherein the exchanging of roles takes place on a continuous basis.

8. Method according to Claim 4, wherein the first core transport function ($CTF_A$) and associated optical-fibre path are defaults employed during normal operation of the connection arrangement.

9. Method according to any one of Claims 2 to 8, wherein the connection arrangement comprises one or more additional further core transport functions ($CTF_{R2}$) and respective associated optical-fibre paths, steps (d), (e) and (f) being also carried out for each of the additional further core transport functions and step (f) being followed by the step of (g') in the event of one of the first, further and additional further core transport functions or associated optical-fibre path becoming non-operational, bringing into operation another of the first, further and additional further core transport functions and associated optical-fibre path.

10. Method according to Claim 9, wherein the first core transport function ($CTF_A$) and associated optical path are defaults employed during normal operation and wherein the further and additional further core transport functions ($CTF_{R1}$, $CTF_{R2}$) and associated optical-fibre paths are assigned a hierarchical rank for the takeover of operation during non-operation of the first core transport function ($CTF_A$) and associated optical-fibre path.

**11.** Method according to Claim 9, wherein the first core transport function ($CTF_A$) and associated optical path are defaults employed during normal operation and wherein, during non-operation of the first core transport function and associated optical-fibre path, a choice is made between the further and additional further core transport functions ($CTF_{R1}$, $CTF_{R2}$) and associated optical-fibre paths on the basis of one or more of their respective service-related properties.

**12.** Method according to Claim 11, wherein the service-related properties include the strength of a signal received by, and the error rate of data contained in a signal received by the respective further and additional further core transport functions ($CTF_{R1}$, $CTF_{R2}$).

**13.** Method substantially as hereinbefore described, or substantially as hereinbefore described with reference to Figures 7, 8, 9 and 10.

EP 1 213 862 A1

**Fig 1**

ONU — Optical Network Unit
OLT — Optical Line Termination
CTF — Core Transport Function
ODN — Optical Distribution Network

**Fig 2**

**Fig 3**

**Fig 4**

**Fig 5**

**Fig 6**

EP 1 213 862 A1

## Fig 7

## Fig 8

**Fig 9**

**Fig 10**

European Patent Office

**EUROPEAN SEARCH REPORT**

Application Number

EP 00 12 7059

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | US 5 357 360 A (REIMANN UDO ET AL) 18 October 1994 (1994-10-18) * the whole document * | 1-9,13 | H04J3/16 H04J3/06 H04L5/14 H04L1/22 |
| Y | | 10-12 | |
| X | US 5 715 074 A (NETSU YUTAKA) 3 February 1998 (1998-02-03) * the whole document * | 1-9,13 | |
| Y | | 10-12 | |
| Y | US 5 537 241 A (FISHER DAVID A) 16 July 1996 (1996-07-16) * the whole document * | 1-3,9,13 | |
| Y | GROOTE DE J L ET AL: "REDUNDANCY AND PROTECTION-SWITCHING IN APON SYSTEMS" BROADBAND ACCESS AND TECHNOLOGY, IOS PRESS, 1999, pages 119-126, XP000829374 Amsterdam ISBN: 90-5199-496-6 * page 120, paragraph 3 * * page 121, line 3 - line 5 * * page 122 - page 124 * | 1-3,9,13 | |
| A | | 4-8 | |
| D,Y | ITU-T RECOMMENDATION G.983.1 - BROADBAND OPTICAL ACCESS SYSTEMS BASED ON PASSIVE OPTICAL NETWORKS (PON), pages 1-118, XP002145020 * page 72 * | 1-3,9,13 | |

TECHNICAL FIELDS SEARCHED (Int.Cl.7)

H04L
H04J
H04B

-/--

The present search report has been drawn up for all claims

| Place of search | Date of completion of the search | Examiner |
|---|---|---|
| THE HAGUE | 6 November 2001 | Koukourlis, S |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**European Patent Office**

## EUROPEAN SEARCH REPORT

Application Number

EP 00 12 7059

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| Y | WO 00 31986 A (ERICSSON TELEFON AB L M) 2 June 2000 (2000-06-02) * abstract * * page 2, line 9 - line 11 * * page 3, line 12 - line 15 * * page 4, line 17 - line 25 * * page 6, line 10 - line 27 * | 10-12 | |
| Y | EP 0 969 619 A (HITACHI LTD) 5 January 2000 (2000-01-05) * abstract * * paragraph '0054! * * paragraph '0089! * * paragraph '0092! * | 10-12 | |
| A | WO 00 52851 A (SPRINGBOARD WIRELESS NETWORKS ;COLVIN WILLIAM (CA); ELLIOTT CHARLE) 8 September 2000 (2000-09-08) * page 33, paragraph 5 * | 4-8 | |
| | | | TECHNICAL FIELDS SEARCHED (Int.Cl.7) |

The present search report has been drawn up for all claims

| Place of search | Date of completion of the search | Examiner |
|---|---|---|
| THE HAGUE | 6 November 2001 | Koukourlis, S |

## ANNEX TO THE EUROPEAN SEARCH REPORT
## ON EUROPEAN PATENT APPLICATION NO.

EP 00 12 7059

This annex lists the patent family members relating to the patent documents cited in the above-mentioned European search report.
The members are as contained in the European Patent Office EDP file on
The European Patent Office is in no way liable for these particulars which are merely given for the purpose of information.

06-11-2001

| Patent document cited in search report | | Publication date | Patent family member(s) | | Publication date |
|---|---|---|---|---|---|
| US 5357360 | A | 18-10-1994 | DE<br>AT<br>CA<br>WO<br>DE<br>EP<br>LU | 4022027 A1<br>112904 T<br>2087015 A1<br>9201341 A1<br>59103242 D1<br>0538277 A1<br>87892 A1 | 16-01-1992<br>15-10-1994<br>12-01-1992<br>23-01-1992<br>17-11-1994<br>28-04-1993<br>16-12-1991 |
| US 5715074 | A | 03-02-1998 | JP<br>JP | 2910669 B2<br>8340301 A | 23-06-1999<br>24-12-1996 |
| US 5537241 | A | 16-07-1996 | GB<br>DE<br>DE<br>EP | 2272608 A ,B<br>69324764 D1<br>69324764 T2<br>0597719 A2 | 18-05-1994<br>10-06-1999<br>09-09-1999<br>18-05-1994 |
| WO 0031986 | A | 02-06-2000 | AU<br>WO | 1430800 A<br>0031986 A2 | 13-06-2000<br>02-06-2000 |
| EP 0969619 | A | 05-01-2000 | JP<br>EP | 2000022630 A<br>0969619 A2 | 21-01-2000<br>05-01-2000 |
| WO 0052851 | A | 08-09-2000 | AU<br>WO | 2788800 A<br>0052851 A1 | 21-09-2000<br>08-09-2000 |

EPC FORM P0459

For more details about this annex : see Official Journal of the European Patent Office, No. 12/82